Europäisches Patentamt

European Patent Office

Office européen des brevets

(19)

(11) Numéro de publication : **0 106 171**
**B1**

(12) **FASCICULE DE BREVET EUROPÉEN**

(45) Date de publication du fascicule du brevet :
28.05.86

(21) Numéro de dépôt : **83109133.5**

(22) Date de dépôt : **15.09.83**

(51) Int. Cl.⁴ : **G 01 N 3/38**, G 01 M 7/00,
G 05 D 19/02

(54) Dispositif de pilotage pour exciter un composant mécanique à sa fréquence de résonance en vue d'un essai de fatigue.

(30) Priorité : 23.09.82 FR 8216046

(43) Date de publication de la demande :
25.04.84 Bulletin 84/17

(45) Mention de la délivrance du brevet :
28.05.86 Bulletin 86/22

(84) Etats contractants désignés :
AT CH DE GB IT LI NL SE

(56) Documents cités :
FR-A- 1 506 348
FR-A- 1 581 464
GB-A- 427 989
US-A- 3 864 618
US-A- 4 049 997

(73) Titulaire : RENAULT VEHICULES INDUSTRIELS
Société Anonyme dite:
129 rue Servient "La Part Dieu"
F-69003 Lyon (FR)

(72) Inventeur : Molimar, Maurice
11 avenue du 11 Novembre 1918
F-69110 Sainte-Foy-les-Lyon (FR)

(74) Mandataire : Casalonga, Axel et al
BUREAU D.A. CASALONGA OFFICE JOSSE & PETIT
Baaderstrasse 12-14
D-8000 München 5 (DE)

**Description**

L'invention concerne les essais de fatigue des composants mécaniques, notamment des composants de moteur.

Ces essais de fatigue sont souvent réalisés avec des machines mécaniques comportant des cames, excentriques, bielles, manivelles et vérins travaillant à des fréquences limitées et exigeant des bâtis très rigides et lourds pour appliquer des efforts élevés.

Une autre solution consiste à exciter l'élément en essai à sa fréquence propre par un excitateur ou un vérin à haute fréquence, ce qui permet de réduire les temps d'essai et les efforts mis en jeu car il suffit pour entretenir les oscillations de compenser la perte d'énergie absorbée par les frottements et les amortissements internes, lesquels sont faibles dans les métaux. Du fait de ce faible amortissement, le coefficient de surtension à la résonance est très élevé, ce qui veut dire que le dispositif d'excitation n'a besoin de fournir qu'un petit effort pour entretenir de grands déplacements correspondant à des contraintes importantes.

On utilise par conséquent un excitateur commandé par un générateur dont on ajuste la fréquence sur celle de l'élément en essai.

En particulier les vibrateurs électromagnétiques sont faciles à utiliser et peuvent atteindre des fréquences beaucoup plus élevées que les machines mécaniques précédentes, mais les efforts qu'ils fournissent sont très limités de sorte que si la fréquence propre de l'élément en essai varie, par exemple par suite d'échauffement, d'écrouissage, d'amorce de rupture, ou pour toute autre raison, et qu'elle diffère par conséquent de celle du générateur, l'effort demandé au vibrateur devient vite trop important pour entretenir les amplitudes de déplacement et les niveaux de contrainte. Il est donc nécessaire de recaler en permanence la fréquence du générateur sur la fréquence propre de l'élément en essai, ce qui constitue un problème qui actuellement n'est pas résolu de façon satisfaisante.

En outre pendant l'essai d'endurance il est nécessaire de réguler le niveau électrique du signal de telle manière que l'amplitude effective des vibrations mécaniques de l'élément en essai soit maintenue à une valeur de consigne préréglée, correspondant à des déformations et à des contraintes constantes et caractéristiques de l'essai d'endurance.

Un dispositif d'essai de fatigue correspondant au préambule de la revendication 1 et comportant des moyens pour contrôler la fréquence et l'amplitude des oscillations, est connu par le document US-A-4 049 997.

Le but de l'invention est par conséquent de résoudre ce problème d'une manière aussi simple et aussi automatique que possible, c'est-à-dire de réaliser un générateur électrique de fréquence sinusoïdale dont la fréquence soit à tout instant égale à la fréquence propre de l'élément soumis aux essais et dont l'amplitude soit constamment régulée de telle manière que l'amplitude propre des vibrations mécaniques de l'élément soumis aux essais soit égale à une valeur de consigne imposée.

L'invention consiste à utiliser un capteur de déplacement, qui mesure les déformations de l'élément soumis aux essais et fournit un signal électrique sinusoïdal, et à utiliser un circuit diviseur analogique qui reçoit à son entrée de numérateur ce signal électrique, et à son entrée de dénominateur un signal de valeur efficace fourni par un convertisseur de valeur efficace alimenté également par le signal du capteur. La sortie du circuit diviseur, éventuellement filtrée et amplifiée, alimente l'excitateur électromagnétique agissant sur l'élément soumis aux essais. Ce même signal de valeur efficace peut être utilisé pour la régulation du niveau du signal alimentant l'excitateur.

L'invention est définie par la revendication indépendante 1 et les revendications dépendantes.

D'autres particularités de l'invention apparaîtront dans la description qui va suivre d'un mode de réalisation pris comme exemple et représenté sur le dessin annexé sur lequel :

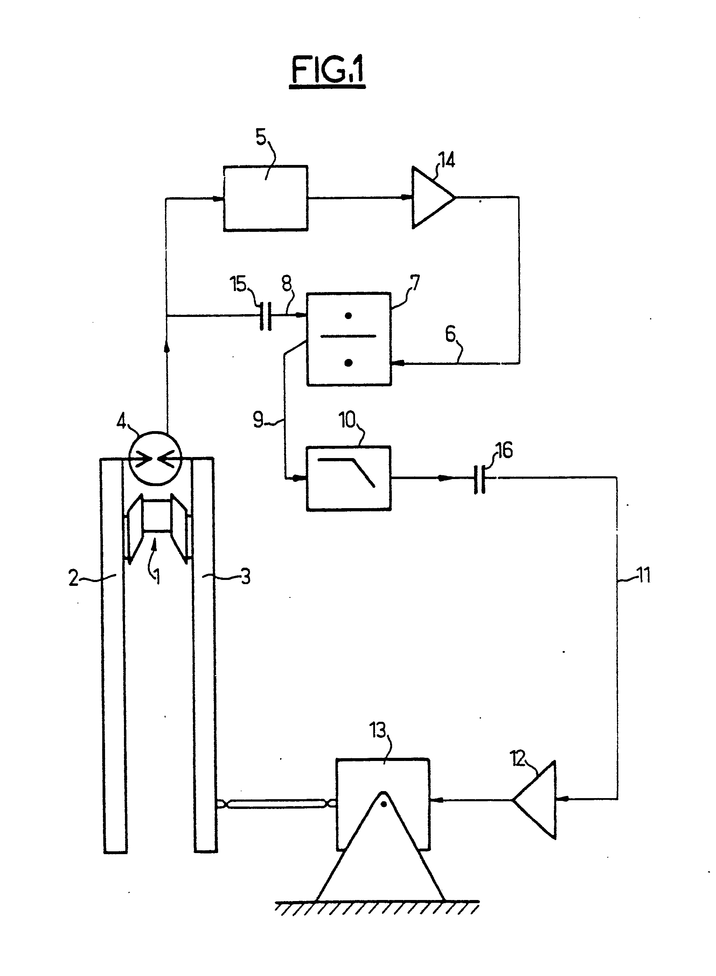

la figure 1   représente le schéma d'asservissement en fréquence ; et
la figure 2   le schéma complet avec asservissement en amplitude.

Sur les figures, on a désigné par 1 l'élément soumis aux essais, par 2 et 3 les armatures du dispositif d'essai et par 4 le capteur de déplacement monté entre ces mêmes armatures.

Ce capteur de déplacement 4 est du type sans contact car les déformations de flexion ne sont pas de forme linéaire.

Ce capteur engendre par conséquent un signal électrique sinusoïdal d'amplitude proportionnelle à la déformation maximum et qui peut s'exprimer par :

$$y_1 = a \sin \omega t .$$

Un convertisseur valeur efficace — courant continu 5 est utilisé en sortie du capteur 4 pour fournir une tension continue proportionnelle à l'amplitude du déplacement, cette valeur efficace étant en principe égale à $a/\sqrt{2}$.

Cette tension est envoyée par 6 au dénominateur d'un circuit diviseur analogique 7 dont le numérateur reçoit par 8 le signal $y_1$ du capteur.

Le signal de sortie en 9 de ce circuit diviseur 7 peut donc s'exprimer par :

$$Y_2 = \frac{a \sin \omega t}{a/\sqrt{2}} = \sqrt{2} \sin \omega t$$

2

qui est donc une sinusoïde d'amplitude constante $\sqrt{2}$ et de fréquence $\omega/2\pi$ qui est la fréquence propre de l'élément 1 soumis aux essais.

Ce signal $y_2$ sortant en 9, passe par un filtre passe-bas 10 dont les rôles sont, d'une part d'éliminer les parasites à haute fréquence du circuit et les ondulations résiduelles pouvant provenir du capteur de déplacement à porteuse haute fréquence, et d'autre part de déphaser le signal de sortie par rapport au signal d'entrée par la fonction de transfert du filtre afin de compenser les déphasages introduits par les différents éléments du circuit.

Le signal ainsi filtré alimente par 11 après amplification 12 l'excitateur électromagnétique 13 qui agit sur l'armature 3.

Au démarrage il n'y a pas de signal de capteur, c'est-à-dire que l'amplitude du signal $y_1$ est nulle. Le circuit diviseur analogique 7 se trouve alors dans des conditions d'indétermination du type 0/0 et se sature. Pour éviter cet écueil il faut un dénominateur non nul, ce que l'on obtient en superposant à la valeur efficace une tension continue faible grâce à un dispositif 14 de décalage de zéro. Il en résulte une légère perte de linéarité, mais celle-ci n'est pas gênante si la valeur ainsi ajoutée est suffisamment faible.

Un condensateur 15 de l'ordre du microfarad est intercalé de préférence entre le capteur 4 et l'entrée 8 du diviseur 7 pour ne pas recevoir de composante continue au numérateur.

Dans ces conditions, au démarrage, c'est-à-dire avec une valeur efficace nulle, le tiroir diviseur se comporte pour le signal du capteur comme un amplificateur à très grand gain, puisque le dénominateur est très petit. Le diviseur 7 amplifie donc fortement tous les parasites d'entrée au point que ceux-ci sont alors d'un niveau suffisant à l'entrée de l'amplificateur de puissance 12 pour permettre une alimentation du vibrateur électromagnétique 13 et une excitation du dispositif d'essai qui va vibrer à sa fréquence propre. L'amorçage des oscillations se produit donc automatiquement.

En fonctionnement le filtre actif 10 est réglé de façon que l'intensité soit la plus faible possible à la sortie de l'amplificateur de puissance 12 pour correspondre à l'effort minimal du vibrateur correspondant à la résonance. Un condensateur 16 interposé à la sortie du filtre permet d'avoir un effort symétrique sur le vibrateur en éliminant la composante continue.

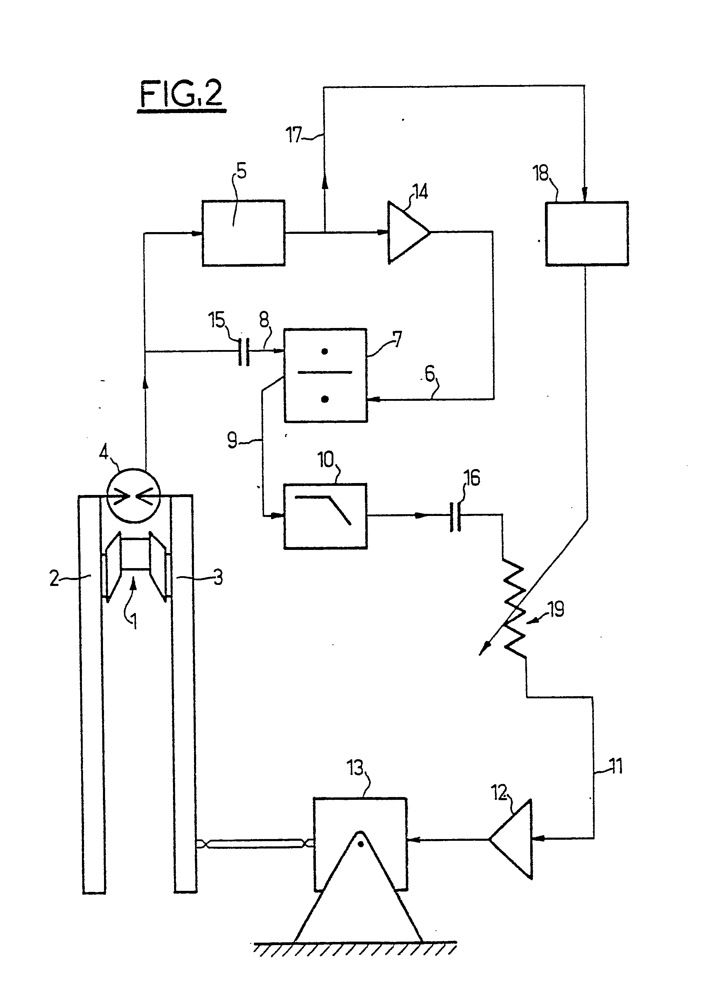

Pour assurer la régulation d'amplitude des oscillations de l'élément soumis à l'essai, on opère comme représenté sur la figure 2 en prélevant par 17 le signal de valeur efficace sortant du convertisseur 5 et en s'en servant pour effectuer la régulation du gain de l'amplificateur 12 ou plus simplement du niveau d'entrée en 11 dans cet amplificateur. Pour cela on utilise par exemple un détecteur 18 comportant un seuil minimum et un seuil maximum, tous les deux définis de part et d'autre de la valeur de consigne prédéterminée mais réglable, ce détecteur agissant lorsque nécessaire et dans le sens voulu sur un potentiomètre 19 de réglage du niveau.

Le dispositif selon l'invention est donc relativement simple, ne nécessite que des composants de faible énergie, et permet de s'adapter très rapidement à toute sorte d'éléments mécaniques tels que vilebrequins, chemises, bielles, fixations de volant, ou autres qui sont transformés en éléments résonants du fait de leur élasticité propre combinée avec les masses des armatures 2 et 3 qui leur sont fixés, ces dernières pouvant être adaptées en masse et en forme aux types de pièces à essayer.

**Revendications**

1. Dispositif d'essai de fatigue d'un organe mécanique par excitation d'un ensemble vibrant (1, 2, 3) comprenant cet organe (1), auquel sont éventuellement adjointes des armatures massives (2, 3), comportant un vibrateur électromagnétique (13) produisant des oscillations et alimenté par un générateur. comportant un capteur (4) de déplacement engendrant un signal sinusoïdal $(Y_1)$ correspondant au déplacement, caractérisé par le fait que le capteur (4) de déplacement est interposé entre deux parties de l'ensemble vibrant (1, 2, 3) et par le fait que ledit générateur comporte en outre un convertisseur (5) de valeur efficace transformant ce signal sinusoïdal en un signal continu proportionnel à la valeur efficace du signal sinusoïdal ; et un circuit diviseur analogique (7) recevant en entrée-numérateur (8) le signal sinusoïdal et en entrée-dénominateur (6) ledit signal de valeur efficace, le signal $(Y_2)$ de sortie (9) de ce circuit diviseur (7) étant utilisé, après passage à travers un amplificateur (12), pour actionner le vibrateur électromagnétique (13).

2. Dispositif selon la revendication 1, caractérisé par le fait qu'un dispositif (14) de décalage de zéro est interposé à la sortie du convertisseur (5) de valeur efficace pour adjoindre une légère composante continue en l'absence de vibrations au capteur (4) afin d'éviter toute indétermination au circuit diviseur (7) et permettre l'amorçage des oscillations.

3. Dispositif selon la revendication 2, caractérisé par le fait qu'il comporte un premier condensateur (15) interposé entre le capteur (4) et l'entrée-numérateur (8) du circuit diviseur (7) afin de supprimer toute composante continue éventuelle.

4. Dispositif selon une des revendications précédentes, caractérisé par le fait qu'à la sortie (9) du circuit diviseur (7) est interposé un filtre actif passe-bas (10) réglé pour éliminer les hautes fréquences parasites et apporter un déphasage convenable.

5. Dispositif selon la revendication 4, caractérisé par le fait qu'un second condensateur (16) est interposé à la sortie du filtre passe-bas (10) pour éliminer toute composante continue et rendre les oscillations parfaitement symétriques.

3

6. Dispositif selon l'une des revendications précédentes, caractérisé par le fait que l'amplitude du signal électrique fourni par l'amplificateur (12) au vibrateur électromagnétique (13) est adaptée automatiquement pour maintenir une amplitude déterminée des vibrations mécaniques de l'ensemble vibrant (1, 2, 3) au moyen d'un régulateur (18, 19) utilisant comme signal d'entrée le signal continu de valeur efficace (17).

7. Dispositif selon la revendication 6, caractérisé par le fait que ledit régulateur (18, 19) comprend un détecteur (18) à seuils maximum et minimum définis de part et d'autre d'une valeur de consigne prédéterminée mais réglable, ce détecteur agissant lorsque nécessaire et dans le sens de correction voulu sur un potentiomètre (19) réglant le niveau d'entrée (11) du signal électrique allant du filtre passe-bas (10) ou du second condensateur (16) à l'amplificateur (12).

**Claims**

1. Device for fatigue-testing a mechanical element by excitation of a vibrating assembly (1, 2, 3) comprising this element (1), which is possibly associated with solid armatures (2, 3), comprising an electromagnetic vibrator (13) producing oscillations and fed by a generator comprising a displacement transducer (4) generating a sinusoidal signal ($Y_1$) corresponding to the displacement, characterized in that the displacement transducer (4) is interposed between two parts of the vibrating assembly (1, 2, 3) and in that the said generator also comprises a root-mean-square-value converter (5) transforming this sinusoidal signal into a continuous signal which is proportional to the root-mean-square value of the sinusoidal signal ; and an analog divider circuit (7) receiving the sinusoidal signal as numerator input (8) and the said root-mean-square signal as denominator input (6), the signal ($Y_2$) of the output (9) of this divider circuit (7) being utilized for activating the electromagnetic vibrator (13) after having passed through an amplifier (12).

2. Device according to Claim 1, characterized in that a zero displacement device (14) is interposed at the output of the root-mean-square-value converter (5) to apply a small direct component to the transducer (4) in the absence of vibrations in order to prevent any uncertainty at the divider circuit (7) and allow oscillations to begin.

3. Device according to Claim 2, characterized in that it comprises a first capacitor (15) interposed between the transducer (4) and the numerator input (8) of the divider circuit (7) to suppress any possible direct component.

4. Device according to one of the preceding claims, characterized in that at the output (9) of the divider circuit (7) an active low-pass filter (10) is interposed which is controlled to eliminate the high parasitic frequencies and bring about an appropriate phase shift.

5. Device according to Claim 4, characterized in that a second capacitor (16) is interposed at the output of the low-pass filter (10) to eliminate any direct component and to produce perfect symmetry in the oscillations.

6. Device according to one of the preceding claims, characterized in that the amplitude of the electric signal supplied by the amplifier (12) to the electromagnetic vibrator (13) is automatically adjusted to maintain a specific amplitude of the mechanical vibrations of the vibrating assembly (1, 2, 3) by means of a regulator (18, 19) utilizing the direct root-mean-square signal (17) as input signal.

7. Device according to Claim 6, characterized in that the said regulator (18, 19) comprises a detector (18) with maximum and minimum thresholds defined on both sides by a predetermined but controllable set value, this detector acting, when necessary and in the desired direction of correction, on a potentiometer (19) regulating the input level (11) of the electric signal passing from the low-pass filter (10) or the second capacitor (16) to the amplifier (12).

**Patentansprüche**

1. Vorrichtung zur Ermüdungsprüfung eines mechanischen Organes durch Anregung einer vibrierenden Anordnung (1, 2, 3), welche dieses Organ (1) umfaßt, an dem gegebenenfalls massive Beschlagteile (2, 3) angeschlossen sind, umfassend einen elektromagnetischen Vibrator (13), der Schwingungen erzeugt und der durch einen Generator beaufschlagt wird, der einen Aufnehmer (4) für die Bewegung umfaßt, der ein sinusförmiges Signal ($Y_1$) abgibt, das der Bewegung entspricht, dadurch gekennzeichnet, daß der Aufnehmer (4) für die Bewegung zwischen zwei Teilen der vibrierenden Anordnung (1, 2, 3) angeordnet ist und, dadurch daß der erwähnte Generator überdies einen Wandler (5) für den Effektivwert umfaßt, der das sinusförmige Signal in ein Gleichstromsignal umwandelt, welches den Effektivwert des sinusförmigen Signals proportional ist und eine analoge Teilerschaltung (7), welche beim Nennereingang (8) das sinusförmige Signal und beim Zählereingang (6) das Signal des Effektivwertes erhält, wobei das Signal ($Y_2$) des Ausganges (9) der Teilerschaltung (7) nach Durchtritt durch einen Verstärker (12) dazu verwendet wird, um den elektromagnetischen Vibrator (13) zu aktivieren.

2. Anordnung nach Anspruch 1, dadurch gekennzeichnet, daß eine Vorrichtung (14) zur Nullageverschiebung zwischen am Ausgang des Wandlers (5) für den Effektivwert eingefügt ist, um bei Abwesenheit von Vibrationen dem Aufnehmer (4) eine schwache Gleichstromkomponente aufzugeben, um jede Unbestimmtheit in der Teilerschaltung (7) zu vermeiden und um den Beginn der Schwingungen zu erlauben. •

3. Anordung nach Anspruch 2, dadurch gekenzeichnet, daß sie einen ersten Kondensator (15) aufweist, der zwischen dem Aufnehmer (4) und dem Zählereingang (8) der Teilerschaltung (7) vorgesehen ist, um jede gegebenenfalls vorhandene Gleichstromkomponente zu unterdrücken.

4. Anordnung nach einem der vorhergehenden Ansprüche, dadurch gekennzeichnet, daß am Ausgang (9) der Teilerschaltung (7) ein aktives Tiefpassfilter (10) vorgesehen ist, um hohe Störfrequenzen zu eliminieren und eine geeignete Phasenregelung zu erbringen.

5. Anordung nach Anspruch 4, dadurch gekennzeichnet, daß ein zweiter Kondensator (16) am Ausgang des Tiefpaßfilters (10) eingefügt ist, um jede Gleichstromkomponente zu vermeiden und um die Schwingungen völlig symmetrisch zu machen.

6. Anordnung nach einem der vorhergehenden Ansprüche, dadurch gekennzeichnet, daß die Amplitude des vom Verstärker (12) dem elektromagnetischen Vibrator (13) aufgegebenen Signals selbsttätig angepaßt wird, um eine bestimmte Amplitude der mechanischen Schwingungen der schwingenden Anordnung (1, 2, 3) mit Hilfe eines Reglers (18, 19) beizubehalten, wobei als Eingangssignal das Gleichstromsignal des Effektivwertes (17) verwendet wird.

7. Anordnung nach Anspruch 6, dadurch gekennzeichnet, daß der Regler (18, 19) einen Detektor (18) mit oberem und unterem Grenzwert umfaßt, die beiderseits eines vorbestimmten, jedoch regulierbaren Einstellwertes angeordnet sind, wobei dieser Detektor, wenn nötig, und im gewünschten Korrektursinn auf ein Potentiometer (19) einwirkt, welches das Eingangsniveau (11) des elektrischen Signals regelt, das vom Tiefpaßfilter (10) oder dem zweiten Kondensator (16) zum Verstärker (12) geht.

FIG.1

0 106 171

1

FIG.2